# EUROPÄISCHE PATENTSCHRIFT

(11) **EP 0 443 203 B1**
(45) Veröffentlichungstag und Bekanntmachung des Hinweises auf die Patenterteilung: **31.08.1994**
(21) Anmeldenummer: 90125622.2
(22) Anmeldetag: 28.12.1990
(51) Int. Cl.: B29C 45/27

(54) **Beheizte Düse, sogenannte Langdüse für ein Kunststoff-Spritzgiesswerkzeug**
Heated nozzle, so-called long nozzle for a plastic injection moulding mould
Buse chauffée, dite buse longue pour un moule d'injection de matière plastique

(30) Priorität: 21.02.1990 DE 4005437
(43) Veröffentlichungstag der Anmeldung: 28.08.1991
(73) Patentinhaber: SFR FORMENBAU DANGELMAIER GMBH, D-72764 Reutlingen (DE)
(72) Erfinder: Reinl, Horst, W-7417 Pfullingen (DE)
(74) Vertreter: Ostriga, Harald

(56) Entgegenhaltungen:
- EP-A- 0 137 888
- EP-A- 0 444 748
- DE-A- 2 821 736
- DE-U- 9 002 048
- US-A- 4 818 217
- US-A- 4 945 630
- KUNSTSTOFFE. Bd. 75, Nr. 8, August 1985,MÜNCHEN DE Seiten 450 - 452; SCHICKER UND LÖHL: 'Angussloses Spritzgiessen vonFluorkunststoffen'
- * idem *

## Beschreibung

Die Erfindung betrifft eine beheizte Düse, die entsprechend dem jeweiligen Oberbegriff des Patentanspruchs 1 und des diesem nebengeordneten Patentanspruchs 2 durch offenkundige Vorbenutzung bekanntgeworden ist.

Derartige beheizte Düsen großer axialer Länge, sogenannte Langdüsen, die durch den erhabenen Bereich einer Form hindurch in die Formhöhlung hineinreichen, werden für verschiedene Fälle eingesetzt. Dies geschieht z.B. dann, wenn der Anspritzpunkt von der Ansichtsfläche des Artikels weg - insbesondere nicht ohne weiteres sichtbar in die Hohlseite eines Artikels hinein - plaziert werden soll.

Den bei der Beheizung derartig langer Düsen auftretenden Wärmestau hat man bei der offenkundig vorbenutzten Langdüse durch eine weite Wendelung bzw. große Steigung des Rohrheizkörpers im mittleren Bereich des Düsenkörpers vermieden. Bei er eingangs beschriebenen vorbekannten Langdüse weist der rohrförmige Düsenkörper eine glatte Außenmantelfläche auf, an welcher der schraubenlinienförmig gewendelte Rohrheizkörper linienartig anliegt. Um die Wärmeübertragung vom Rohrheizkörper auf den Düsenkörper zu verbessern, wird der Rohrheizkörper in einer Kokille oder in einer anderen Hohlform mittels Kupfer oder mittels eines geeigneten Sintermetalls mit der Außenmantelfläche des Düsenkörpers wärmeleitend vergossen.

Obwohl keine feste Regel existiert, ist es üblich, beheizte Düsen, die eine Länge von etwa 200 mm überschreiten, als Langdüsen zu bezeichnen.

Von einer Kurzdüse mit einem etwa 45 mm langen rohrförmigen Düsenkörper ist es bekannt, relativ dünne Heizdrähte mittels Hartlot in relativ schmale düsenkörperseitige Umfangsnuten einzulegen. Diese Umfangsnuten verlaufen sowohl an der Zuström- als auch an der Abströmseite der Kunststoffschmelze eng gewendelt und im mittleren Bereich der Düsenkörper-Außenmantelfläche weit gewendelt. Die letztbeschriebene beheizte Kurzdüse ist durch einen sechsseitigen Faltprospekt "MOLD MASTERS Compact Master-Shot Serie" der MOLD MASTERS LIMITED 1988 mit dem Druckvermerk G-CMS-9-88 bekanntgeworden.

Von einer anderen beheizten Kurzdüse (DE-OS 30 46 471) ist es bekannt, einen Rohrheizkörper in entsprechend breite und tiefe Umfangsnuten gleichbleibender Steigung des Düsenkörpers satt einzulegen und mittels einer die Anordnung außen umschließenden Stahlhülse in die Nut hinein zu verpressen. Durch diese Maßnahme wird eine verbesserte Wärmeübertragung vom Rohrheizkörper auf den Düsenkörper erreicht.

Von einer anderen beheizten Kurzdüse (DE-OS 34 31 173) ist es bekannt, einen einstückigen Düsenkörper auf ein den Zentralkanal für die Kunststoffschmelze bildendes Rohr aufzuschieben.

Die eingangs beschriebene, durch offenkundige Vorbenutzung bekanntgewordene Langdüse wird wegen ihres aufwendig anzugießenden, den Rohrheizkörper aufnehmenden Kupfer- bzw. Sintermetallmantels als nachteilig empfunden.

Den Düsenkörper einer Langdüse zur Aufnahme eines Rohrheizkörpers mit ausgeprägten breiten und tiefen Nuten gleichbleibender Steigung zu versehen (s. DE-OS 30 46 471), wäre mit einem tragbaren Aufwand an Zerspanungsarbeit grundsätzlich möglich, jedoch ergäbe sich hierbei im Betrieb das Problem eines unzulässigen Wärmestaus. Eine derartige breite und tiefe Nut bei einem überlangen Düsenkörper mit zwei endseitig engen Wendelungen und einer weiten Wendelung im mittleren Bereich (vergleichbar der Kurzdüse entsprechend dem vorerwähnten Prospekt "MOLD-MASTERS....") zu versehen, wäre hingegen nur mit einem äußerst großen Fertigungsaufwand zu realisieren. Dieser unvertretbar große Fertigungsaufwand wäre allein durch die unterschiedliche Nutsteigung hervorgerufen, die sich auf gängigen Drehautomaten nur mit großem Zeitaufwand herstellen läßt.

Im Bewußtsein dieser zuletzt beschriebenen Nachteile liegt der Erfindung, ausgehend von der eingangs beschriebenen, offenkundig vorbenutzten Langdüse der engeren Gattung, die Aufgabe zugrunde, eine derartige Langdüse rationeller als bisher herstellen und zusätzlich den individuellen Anforderungen des Formenbauers besser anpassen zu können.

Entsprechend der Erfindung wird diese Aufgabe gemäß dem jeweiligen Kennzeichenteil des Patentanspruchs 1 und des diesem nebengeordneten Patentanspruchs 2 gelöst.

Hiernach sieht die Erfindung in erster Linie eine Aufteilung des Düsenkörpers in separate Axialabschnitte vor, von denen jeder eine Umfangsnut einheitlicher Steigung trägt. Derartige Körper mit Umfangsnuten einheitlicher Steigung lassen sich im Vergleich zu Körpern mit Umfangsnuten unterschiedlicher Steigung mit einem Bruchteil der Fertigungskosten auf gängigen Drehautomaten herstellen. Ein weiterer Vorteil der Erfindung besteht darin, daß der Düsenkörper nunmehr entsprechend den in der Praxis häufig vorkommenden Längen gewissermaßen baukastenmäßig zusammengesetzt werden kann. Die Trennfugen zwischen den einzelnen Axialabschnitten erstrecken sich zweckmäßig radial. Die Übergangsanschlüsse der Nuten von einem Axialabschnitt zum anderen lassen sich ohne weiteres durch Relativverdrehung der Axialabschnitte gegeneinander fluchtend herstellen.

Grundsätzlich ist es demnach ebenfalls möglich, daß die vom Formenbauer gewünschte Länge durch Axialabschnitte den individuellen Bedürfnissen seiner Werkzeugform angepaßt werden kann.

Das den Zentralkanal für die Kunststoffschmelze bildende kreiszylindrische innere Tragrohr kann herstellerseitig als Fixlänge oder aber als Rohr mit Überlänge, gewissermaßen vom "laufenden Meter" abgelängt, geliefert werden. Auch das Tragrohr kann selbstverständlich auf die individuell erforderliche Länge gekürzt werden.

Beheizte Düsen, so auch Langdüsen, können sowohl gehäuselos (in diesem Falle bildet die Formplatte selbst das Gehäuse) als auch zusammen mit einem gesonderten Gehäuse verwendet werden.

Obwohl die Erfindung im Zusammenhang mit einem Gehäuse auch mit einem einteiligen Gehäusemittelteil zur Anwendung gelangen kann, sieht die Erfindung ergänzend vor, das Gehäusemittelteil in mindestens zwei Axial-Gehäuseteile aufzuteilen, so daß auch hier die grundsätzliche Möglichkeit einer Längenanpassung - z.B. in Form unterschiedlich langer oder zusätzlicher Distanzstücke - möglich ist.

Insgesamt ist es der Erfindung gelungen, eine Langdüse aus normalisierten Einzelteilen baukastenmäßig herzustellen.

Die Erfindung ist auch durch eine beheizte Angußbuchse gemäß der US 4 882 469 nicht nahegelegt. Jene bekannte Angußbuchse besitzt einen langgestreckten etwa topfförmigen Körper, welcher als einstückig-stoffschlüssigen Bestandteil einen konzentrisch angeordneten rohrförmigen Körper zur Bildung eines Durchflußkanals für die aufzuheizende Schmelze aufweist.

In axialer Hinteranordnung sind auf den rohrförmigen Körper zwei gleichlange Keramikbuchsen aufgeschoben, von denen jede gesondert mittels einer separaten Heizdrahtwendel umwickelt ist.

Auf diese Weise können die beiden Keramikbuchsen gemeinsam oder getrennt voneinander, d.h. ein- oder zweistufig, aufgeheizt werden.

Die US 4 882 469 offenbart demnach zwei voneinander unabhängige Heizdrahtwendel, welche mit dem erfindungsgemäßen durchgehenden Rohrheizkörper, dessen Windungen zudem noch eine unterschiedliche Steigung aufweisen, kaum vergleichbar sind. Auch ist bei den Keramikbuchsen gemaß der US 4 882 469 im Unterschied zur erfindungsgemäßen beheizten Düse keine schraubenlinienförmig verlaufende Nut zur Aufnahme eines Rohrheizkörpers uneinheitlicher Steigung vorgesehen.

Bei der Angußbuchse gemäß US 4 882 469 stellt sich demnach überhaupt nicht das der Erfindung zugrunde liegende Problem, eine Langdüse mit einem gewendelten Rohrheizkörper unterschiedlicher Steigung in rationeller Weise herstellen. Die Erfindung löst indessen dieses Problem in einer eigenartigen, mit dem Gegenstand der US 4 882 469 keineswegs vergleichbaren, Weise.

In weiterer Ausgestaltung der Erfindung ist anstelle mindestens eines mit einer weitgewendelten Nut versehenen Axialabschnittes des Düsenkörpers ein außen glatter kreiszylindrischer Axialabschnitt einsetzbar, dessen Außendurchmesser dem Kerndurchmesser eines mit Nuten versehenen Drüsenkörper-Axialabschnittes gleich ist. Dieses Merkmal sieht die Erfindung vor, wenn auf einem mittleren Axialbereich des Düsenkörpers die Wärmeübertragung in gewissen Anwendungsfällen auf ein Minimum herabgesetzt werden soll.

In Kombination der Erfindungsmerkmale mit Merkmalen, die durch die DE-OS 30 46 471 an sich bekannt sind, kann es zur Verbesserung der Wärmeübertragung vom Rohrheizkörper auf den Düsenkörper gegebenenfalls zweckmäßig sein, den Rohrheizkörper mittels einer ihn außen umgebenden, mit dem Düsenkörper koaxialen Hülse in radial angepreßter Lage gegen den Düsenkörper zu halten.

In den Zeichnungen ist die Erfindung anhand bevorzugter Ausführungsbeispiele näher dargestellt,
es zeigen
Fig. 1 eine Langdüse mit Gehäuse in Seitenansicht,
Fig. 2 eine gehäuselose Langdüse in Seitenansicht unter Weglassung elektrischer Anschlußelemente,
Fig. 3 Einzelbauelemente einer Langdüse gemäß Fig. 2 unter Weglassung eines Rohrheizkörpers und elektrischer Anschlußelemente und
Fig. 4 einen axialen Teilschnitt durch den vorderen Bereich einer Langdüse in vergrößerter Darstellung etwa gemäß der mit IV bezeichneten Einkreisung in Fig. 1.

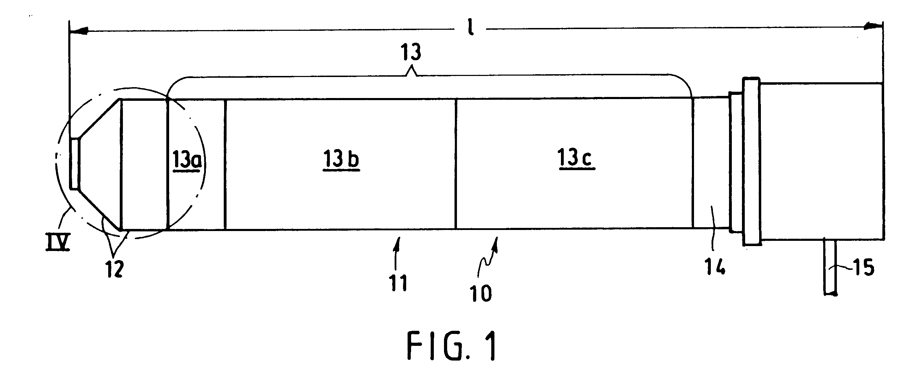

Die in Fig. 1 dargestellte, insgesamt mit 10 bezeichnete, Langdüse weist eine Länge l von etwa 450 mm auf.

Von der Langdüse 10 ist in Fig. 1 lediglich ein Gehäuse 11 mit einem Vorderteil 12, einem Mittelteil 13 und einem Hinterteil 14, letzteres mit einer Stromzuführung 15, zu ersehen.

Das Mittelteil 13 besteht aus drei separaten Axialgehäuseteilen 13a, 13b, 13c.

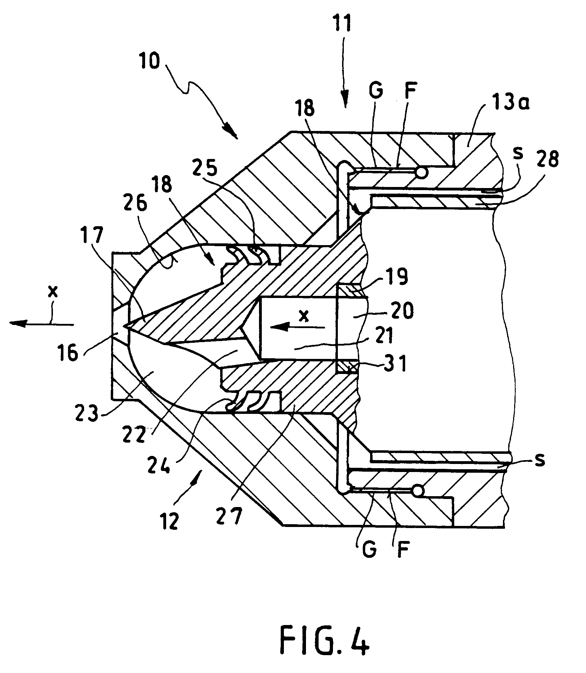

Die einzelnen Gehäuseteile 12, 13a, 13b, 13c und 14 sind auf zweckmäßige Weise axial aneinandergeschlossen, beispielsweise mittels einer in Fig. 4 dargestellten stufenförmigen Fuge F mit Gewindeverbindung G.

Bezüglich der weiterzuleitenden Kunststoffschmelze ist das trichterförmig eingezogene Gehäusevorderteil 12 abströmseitig mit einer Düsenöffnung 16 versehen, welche in nicht dargestellter Weise an eine artikelbildende Formhöhlung anschließt.

In die Düsenöffnung 16 hinein ragt eine Düsenspitze 17 eines etwa rohrförmigen Düsenkörpers 18, mit welchem die Düsenspitze 17 entweder einteilig ausgebildet (wie dargestellt) oder als gesondertes Teil eingesetzt sein kann.

Innerhalb des Düsenkörpers 18 ist ein Tragrohr 19 angeordnet, welches einen Zentralkanal 20 zur Fortleitung der nicht dargestellten Kunststoffschmelze umgibt. Aus dem Zentralkanal 20 fließt die Kunststoffschmelze über einen Teilkanal 21 und die Austrittsöffnung 22 jeweils der Düsenspitze 17 in einen etwa teilparabolartig ausgebildeten Düsenvorraum 23 und von dort - wie oben erwähnt - weiter durch die Düsenöffnung 16 in die nicht gezeigte Formhöhlung. Düsenöffnung 16 und Düsenvorraum 23 sind gemäß Fig. 4 Ausbildungen des Vorderteils 12 des Gehäuses 11. Bei einer gehäuselosen Langdüse 10 sind die Bereiche 16 und 23 von der Formplatte des Werkzeugs unmittelbar gebildet.

Die erwähnten Bauteile der Langdüse 10 bestehen aus geeignetem Werkstoff, insbesondere aus Metall. So besteht das Gehäuse 11 beispielsweise aus Stahl, der Düsenkörper 18 mit Düsenspitze 17 aus Cu oder aus CuBe. Insbesondere wenn CuBe verwendet wird, ist es zweckmäßig, mit der Düsenspitze 17 einstückig-stoffschlüssige ringförmige Dichtlippen 24, 25 vorzusehen, welche unter dem Druck der Kunststoffschmelze elastisch verformbar sind und sich hierdurch entgegen der Fließrichtung x der Kunststoffschmelze nach rückwärts gegen die Innenwandung 26 des Düseninnenraumes 23 - eine Rückdichtung darstellend - anlegen können. Die beiden Dichtlippen 24, 25 sind einem Zentrierbund 27, welcher sich an der ihm gegenüberliegenden und dort kreiszylindrischen Innenfläche 26 anlegt, in Fließrichtung x stromabwärts vorgelagert.

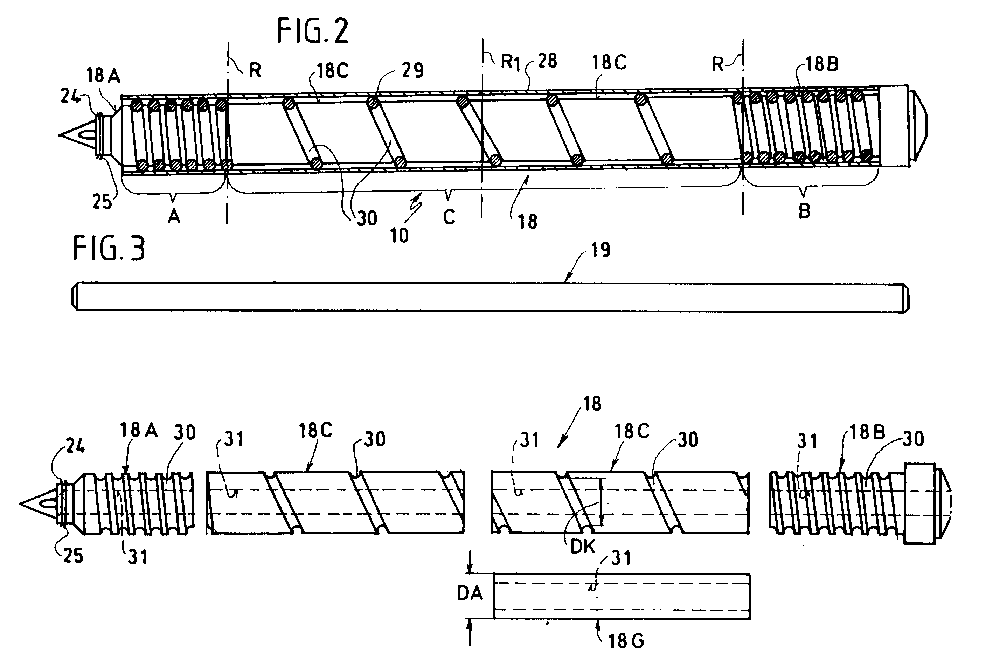

Aus Fig. 4 ist noch ein axial vorderer Teil einer aus rostfreiem Edelstahl bestehenden Metallhülse 28 zu ersehen, welche dazu dient, den mit Fig. 2 dargestellten Rohrheizkörper 29 in die sich schraubenlinien- bzw. wendelförmig erstreckende Umfangsnut 30 hineingepreßt zu halten.

Zwischen der Metallhülse 28 und dem Gehäuse 11 bzw. 13a, 13b, 13c sowie 14 ist ein Luftspalt S als Wärmeisolation vorhanden.

Die Nut 30, welche außenmantelseitig in den insgesamt mit 18 bezeichneten Düsenkörper spangebend eingearbeitet ist, weist im Hinblick auf die Fließrichtung x der Kunststoffschmelze sowohl bei A, benachbart der Abströmseite, als auch bei B, benachbart der Zuströmseite, eine geringe Steigung bzw. eine enge Wendelung auf. Zwischen diesen Steigungsbereichen A und B ist ein Bereich C vorhanden, in welchem der Rohrheizkörper 29 eine vergleichsweise sehr große Steigung bzw. eine sehr weite Wendelung besitzt.

Der mittlere Steigungsbereich C mit weiträumiger Wendelung dient der Vermeidung eines Wärmestaus bei Beheizung des Düsenkörpers 18 mittels des mit elektrischem Strom zu beschickendem Rohrheizkörpers 29. Der Rohrheizkörper 29 ist übrigens so aufgebaut, wie in der DE-OS 30 46 471 (vgl. insbesondere Fig. 2) gezeigt.

Die jeweilige Steigung der Nut 30 und die jeweilige Steigung des Rohrheizkörpers 29 korrespondieren miteinander in den einzelnen Steigungsbereichen A, C und B, zumal der Rohrheizkörper 29 satt in der Nut 30 einliegt bzw. dort mittels der radiales Untermaß aufweisenden Metallhülse 28 eng eingepreßt gehalten ist.

Im Übergang von einem Steigungsbereich A zu C bzw. von C zu B ist der Düsenkörper 18 entlang gestrichelt dargestellter radialer Teilungsebenen R unterteilt. Außerdem ist der Düsenkörper 18 in seinem mittleren Bereich entlang einer zusätzlichen radialen Teilungsebene R1 aufgeteilt. Insgesamt besteht also der Düsenkörper 18 entgegen der Strömungsrichtung x stromaufwärts hintereinanderfolgend aus den einzelnen Axialabschnitten 18A, 18C, 18C und 18B.

Alle Einzelabschnitte 18A-18C weisen eine aus Fig. 3 gestrichelt ersichtliche Zentralbohrung 31 auf. Mittels dieser Zentralbohrung 31 sind die einzelnen Axialabschnitte 18A-18C in der in den Fig. 2 und 3 dargestellten Reihenfolge auf das umfangsglatte Tragrohr 19 "aufgefädelt" bzw. mit relativ enger Passung, z.B. mit der Passung p6, h7, aufgepreßt.

Die einzelnen Axialabschnitte 18A-18C sind durch Verdrehung derart zueinander umfangszentriert, daß die einzelnen Steigungsbereiche A, C und B der Nut 30 durchgängig miteinander fluchten, so daß eine Aufnahme des Rohrheizkörpers 29 ohne weiteres übergangslos gewährleistet ist.

Für den Fall, daß auf einem der mittleren Bereiche bei C die Wärmeübertragung vom Rohrheizkörper 29 auf den Düsenkörper 18 weiter herabgesetzt werden soll, kann anstelle eines Düsenkörper-Axialabschnittes 18C ein außen glatter Axialabschnitt 18G eingesetzt werden, welcher ebenfalls über eine Zentralbohrung 31 gleichen Innendurchmessers - wie vordem beschrieben - verfügt. Die Außenmantelfläche des Axialabschnittes 18G würde in einem solchen Falle vom Rohrheizkörper 29 nur linienförmig berührt, zumal der Außendurchmesser DA des Axialabschnittes 18G gleich dem Kerndurchmesser DK eines der Axialabschnitte 18A, 18C oder 18B ist.

Im Zusammenhang der vorangegangenen Beschreibung ist vorstellbar, daß sämtliche wesentlichen Bauteile, als da sind die Gehäuseteile 13a, 13b, 13c, die Düsenkörper-Axialabschnitte 18A-18C, das Tragrohr 19 und schließlich die Metallhülse 28, entsprechend dem individuellen Bedarf des Formenbauers gekürzt werden können.

## Patentansprüche

1. Beheizte Düse, sogenannte Langdüse, zur Zuführung einer Kunststoffschmelze durch den erhabenen Bereich einer Form hindurch in die Formhöhlung eines Kunststoff-Spritzgießwerkzeuges hinein, mit einem von der Kunststoffschmelze innerhalb eines Zentralkanals (20) durchströmbaren rohrartigen Düsenkörper (18), welcher außen von einem schraubenlinienförmig gewendelten Rohrheizkörper (19) umgeben ist, der auf je einem Bereich (A, B) des Düsenkörpers (18) sowohl benachbart dessen Abström- als auch dessen Zuströmseite für die Kunststoffschmelze eine geringe Steigung mit enger Wendelung aufweist und der in einem mittleren Bereich (C) eine große Steigung mit weiter Wendelung besitzt, dadurch gekennzeichnet, daß der Düsenkörper (18) außenmantelseitig zur Aufnahme des Rohrheizkörpers (29) mit einer schraubenlinienförmig verlaufenden Nut (30) versehen ist, deren Steigungsbereiche (A, B, C) mit denen des Rohrheizkörpers (29) korrespondieren und daß der Düsenkörper (18) zumindest im Übergang von einem Steigungsbereich (z.B. A) zum anderen Steigungsbereich (z.B. C) unter Bildung gesonderter Axialabschnitte (18A, 18B, 18C) geteilt ist, die mit enger Passung auf ein den Zentralkanal (20) für die Kunststoffschmelze bildendes kreiszylindrisches inneres Tragrohr (19) aufgeschoben sind.

2. Beheizte Düse, sogenannte Langdüse, zur Zuführung einer Kunststoffschmelze durch den erhabenen Bereich einer Form hindurch in die Formhöhlung eines Kunststoff-Spritzgießwerkzeuges hinein, mit einem von der Kunststoffschmelze innerhalb eines Zentralkanals (20) durchströmbaren rohrartigen Düsenkörper (18), welcher außen von einem schraubenlinienförmig gewendelten Rohrheizkörper (19) umgeben ist, der auf je einem Bereich (A, B) des Düsenkörpers (18) sowohl benachbart dessen Abström- als auch dessen Zuströmseite für die Kunststoffschmelze eine geringe Steigung mit enger Wendelung aufweist und der in einem mittleren Bereich (C) eine große Steigung mit weiter Wendelung besitzt, und wobei der den Rohrheizkörper (19) tragende Düsenkörper (18) in einem Gehäuse (11) aufgenommen ist, welches aus einem der Abströmseite benachbarten Vorderteil (12), einem der Zuströmseite benachbarten Hinterteil (14) sowie aus einem Vorder- und Hinterteil verbindenden Mittelteil (13) besteht, dadurch gekennzeichnet, daß der Düsenkörper (18) außenmantelseitig zur Aufnahme des Rohrheizkörpers (29) mit einer schraubenlinienförmig verlaufenden Nut (30) versehen ist, deren Steigungsbereiche (A, B, C) mit denen des Rohrheizkörpers (29) korrespondieren und daß der Düsenkörper (18) zumindest im Übergang von einem Steigungsbereich (z.B. A) zum anderen Steigungsbereich (z.B. C) unter Bildung gesonderter Axialabschnitte (18A, 18B, 18C) geteilt ist, die mit enger Passung auf ein den Zentralkanal (20) für die Kunststoffschmelze bildendes kreiszylindrisches inneres Tragrohr (19) aufgeschoben sind und daß das Gehäuse-Mittelteil (13) aus mindestens zwei Axial-Gehäuseteilen (13a, 13b, 13c) besteht.

3. Beheizte Düse nach Anspruch 1 oder nach Anspruch 2, dadurch gekennzeichnet, daß anstelle mindestens eines mit einer weit gewendelten Nut (30) versehenen Axialabschnittes (18C) ein außen glatter kreiszylindrischer Axialabschnitt (18G) einsetzbar ist, dessen Außendurchmesser (DA) dem Kerndurchmesser (DK) eines mit Nuten (30) versehenen Axialabschnittes (z.B. 18C) gleich ist.

4. Beheizte Düse nach einem der vorangehenden Ansprüche, dadurch gekennzeichnet, daß der Rohrheizkörper (29) mittels einer ihn außen umgebenden, mit dem Düsenkörper (18) koaxialen Hülse (28) in radial angepreßter Lage gegen den Düsenkörper (18) gehalten ist.

## Claims

1. A heated nozzle or "long nozzle" for supplying a plastics melt through the raised portion of a plastics injection mould into the mould cavity, the nozzle comprising a tubular nozzle member (18) through which the plastics melt flows inside a central duct (20) and which is externally surrounded by a helically coiled tubular heating member (19) which has a small pitch and closely-spaced coils along regions (A, B) of the nozzle member (18) adjacent the inflow and outflow ends for the plastics melt whereas its central region (C) has a large pitch with widely-spaced coils, characterised in that the outer surface of the nozzle member (18) is formed with a helical groove (30) for receiving the tubular heating member (29), the groove having regions (A, B, C) which correspond in pitch to the regions of the tubular heating member (29), and the nozzle member (18), at least in the transition from one pitch region (e.g. A) to another pitch region (e.g. C), is divided into separate axial portions (18A, 18B, 18C) which are slid with a close fit over a circular-cylindrical inner supporting tube (19) constituting the central duct (20) for the plastics melt.

2. A heated nozzle or "long nozzle" for supplying a plastics melt through the raised portion of a plastics injection mould into the mould cavity, the nozzle comprising a tubular nozzle member (18) through which the plastics melt flows inside a central duct (20) and which is externally surrounded by a helically coiled tubular heating member (19) which has a small pitch and closely-spaced coils along regions (A, B) of the nozzle member (18) adjacent the inflow and outflow ends for the plastics melt whereas its central region (C) has a large pitch with widely-spaced coils, the nozzle member (18) carrying the tubular heating member (19) being received in a casing (11) comprising a front part (12) adjacent the outflow end, a rear part (14) adjacent the inflow end, and a middle part (13) connecting the front part and the rear part, characterised in that the outer surface of the nozzle member (18) is formed with a helical groove (30) for receiving the tubular heating member (29), the groove having regions (A, B, C) which correspond in pitch to the regions of the tubular heating member (29), and the nozzle member (18), at least in the transition from one pitch region (e.g. A) to another pitch region (e.g. C) is divided into separate axial portions (18A, 18B, 18C) which are slid with a close fit over a circular-cylindrical inner supporting tube (19) constituting the central duct (20) for the plastics melt, and the central part (13) of the casing consists of at least two axial parts (13a, 13b, 13c).

3. A heated nozzle according to claim 1 or claim 2, characterised in that at least one axial portion (18C) formed with a wide-pitched groove (30) can be replaced by an externally smooth circular-cylindrical axial portion (18G) having an outer diameter (DA) equal to the core diameter (DK) of an axial portion (e.g. 18C) formed with grooves (30).

4. A heated nozzle according to any of the preceding claims, characterised in that the tubular heating member (29) is surrounded by a sleeve (28) which is coaxial with the nozzle member (18) and holds the heating member radially pressed against the nozzle member (18).

## Revendications

1. Buse chauffée, appelée buse longue, pour délivrer une matière synthétique en fusion dans la zone creusée d'un moule, dans la cavité de moule d'un outil de moulage par injection de matière synthétique, avec un corps de buse (18) tubulaire, pouvant être traversé par l'écoulement de la matière synthétique en fusion passant à l'intérieur d'un canal central (20) et entouré extérieurement par un corps de chauffage tubulaire (19) enroulé en hélice, présentant chaque fois sur une zone (A, B) du corps de buse (18), aussi bien du côté de sortie de l'écoulement qu'également du côté arrivée de l'écoulement de la matière synthétique en fusion, une faible inclinaison, avec un enroulement étroit, et ayant dans une zone médiane (C) une plus grande inclinaison avec un enroulement large,
caractérisée en ce que le corps de buse (18) est pourvu, du côté de son enveloppe extérieure, d'une gorge (30) hélicoïdale destinée à recevoir le corps chauffant tubulaire (29), gorge dont les zones d'inclinaison (A, B, C) correspondent avec celles du corps chauffant (29), et en ce que le corps de buse (18) est subdivisé, au moins à la transition entre une première zone de pente (par exemple A) et une autre zone de pente (par exemple C) en constituant des tronçons axiaux (18A, 18B, 18C) distincts, enfilés avec un ajustement serré sur un tube support intérieur (19), en forme de cylindre de révolution, constituant le canal central (20) destiné à la matière synthétique en fusion.

2. Buse chauffée, appelée buse longue, pour délivrer une matière synthétique en fusion, à travers la zone creusée d'un moule, en passant par la cavité de moule d'un outil de moulage par injection de matière synthétique, avec un corps de buse (18) tubulaire pouvant être parcouru par l'écoulement de la matière synthétique en fusion à l'intérieur d'un canal central et entouré extérieurement par un corps chauffant tubulaire enroulé en hélice, présentant chaque fois sur une première zone (A, B) du corps de buse (18), aussi bien au voisinage du côté d'évacuation qu'également du côté d'arrivée de l'écoulement de la matière synthétique en fusion, une faible inclinaison avec un enroulement étroit, et présentant dans une zone médiane (C) une grande inclinaison avec un enroulement large, le corps de buse portant le corps de chauffage tubulaire (19) étant logé dans un carter (11) composé d'une partie avant (12) voisine du côté d'évacuation de l'écoulement, d'une partie arrière (14) voisine du côté d'arrivée de l'écoulement, ainsi que d'une partie médiane (13) reliant la partie avant et la partie arrière,
caractérisée en ce que le corps de buse (18) est pourvu, du côté extérieur à l'enveloppe, d'une gorge (30) s'étendant hélicoïdalement, pour recevoir le corps chauffant tubulaire (29), et dont les zones d'inclinaison (A, B, C) correspondent à celles du corps chauffant tubulaire (29), et en ce que le corps de buse (18) est subdivisé, au moins à la transition entre une première zone d'inclinaison (par exemple A) et l'une zone d'inclinaison (par exemple C) en constituant des tronçons axiaux (18A, 18B, 18C) distincts, enfilés avec un ajustement serré sur un tube support intérieur (19), en forme de cylindre de révolution, constituant le canal central (20) pour la matière synthétique en fusion, et en ce que la partie médiane de carter (13) est composée d'au moins deux parties axiales de carter (13a, 13b, 13c).

3. Buse chauffée selon la revendication 1 ou selon la revendication 2,
caractérisée en ce qu'au lieu d'au moins un tronçon axial (18C) pourvu d'une gorge (30) à enroulement large peut être réalisé un tronçon axial (18G) extérieurement lisse et de forme cylindrique circulaire, dont le diamètre extérieur (DA) est égal au diamètre de noyau (DK) d'un tronçon axial (par exemple 18C) pourvu de gorges (30).

4. Buse chauffée selon l'une des revendications précédentes,
caractérisée en ce que le corps chauffant tubulaire (29) est maintenu, radialement appliqué contre le corps de buse (18), au moyen d'une douille (28) l'entourant extérieurement et coaxiale par rapport audit corps de buse (18).
